# EUROPEAN PATENT APPLICATION

(11) **EP 4 254 098 A1**
(43) Date of publication of application: **04.10.2023**
(21) Application number: 22165824.8
(22) Date of filing: 31.03.2022
(51) Int. Cl.: G05B 19/418, B25J 9/16, G05B 19/409

(54) **CONTROLLING AN AUTOMATION SYSTEM COMPRISING A PLURALITY OF MACHINES**

(71) Applicant: Siemens Aktiengesellschaft, 80333 München (DE)
(72) Inventor: Ionescu, Tudor, 1190 Wien (AT); Fröhlich, Joachim, 85614 Kirchseeon (DE)
(74) Representative: Siemens Patent Attorneys

(57) **Abstract**

Provided is a method and a computation device for controlling an automation system, the system comprising at least one of a plurality of machines, each of the plurality of machines including a proprietary control computer and a proprietary human-machine-interface, i.e. HMI, the method comprising the steps of:
providing a first program being implemented on the proprietary control computer, the first program comprising at least an operating instruction for carrying out an operation by the at least one machine, and at least a displaying instruction for displaying a graphical element in the proprietary HMI;
monitoring the graphical element of the proprietary HMI by a second program being implemented on a computation device, which is connected to the automation system;
operating the first program by means of triggering a user input to the proprietary HMI, the user input being emulated by the second program based on the monitored graphical element.

## Description

The present invention is related to a method and a computational device for controlling an automation system, the system comprising at least one of a plurality of machines, preferably production machines, each of the plurality of machines including a proprietary control computer and proprietary human-machine-interface (HMI) for controlling the machine.

An automation system, also referred to as production machine system, production system, cyber-physical production system (CPPS) or cyber-physical system (CPS) realizes an automation process through coordinated interactions (or collaboration) using a communication network and software-based coordination of machines, also referred to as production machine(s) or manipulator(s) (e.g., industrial manipulators, collaborative robots, autonomous guided vehicles, conveyors, etc.).

In the prior art, CPPS are "hard-wired" production systems which are connected using communication protocols, like OPC UA (Open Platform Communications Unified Architecture) and Modbus over hardware interfaces to realize a production process in tightly coupled coordination with other machines (e.g., using signals transmitted over a OPC UA or Modbus connection).

Several problems arise from this state of things. First, using hard-wired production machines, a "lot size one" production (i.e., where only one unit or a very small batch of a possibly new product variant is to be produced) cannot be realized because the rewiring of different production machines according to a new production process and the recoding of their program code is too expensive.

A flexible "lot size 1" (i.e., small batch) production requires frequent updates and/or reconfigurations of CPPS (including wiring and software) at the shop floor level; for example, (1) to adapt the locations where manipulators perform production steps; (2) to adapt the logic of manipulator programs at runtime (i.e., without downtimes and manual, physical human intervention) to implement an entirely new production process; (3) to dynamically interact with other production machines to realize a complex production process, which requires a plurality of steps performed by specialized manipulators (e.g., assembly, screwing, drilling, etc.); (4) and to adapt to changes in the environment of the CPPS to avoid collisions, safety hazards, and quality issues (i.e., wrong assembly, destruction of materials, endangering humans that might be present in the working environment temporarily etc.).

In general, the software of production machines cannot be updated as frequently as other software because of safety and reliability concerns. For the same reasons, the automated remote control and programming (e.g., from an industrial cloud environment) of CPPS, like a system of industrial manipulators, is currently only possible under strict conditions, which involve additional safeguards and a testing mode of operation. The need for testing systems in operation reduces the flexibility of the lot size 1 production approach by requiring human intervention on the shop floor level, for example, to adjust the locations where CPPS manipulate work pieces to perform production steps to prevent collisions, safety, and quality issues. In the case of collaborative industrial robots (i.e., an industrial manipulator, which works near humans without requiring a safety fence), manipulators are subjected to strict speed, force, and other limitations when working in the proximity of humans. A software update cannot change these settings. In this context, faulty software updates can generate new risks and hazards and must therefore be verified before being operationalized.

Another problem arises from the need for the machines of the CPPS to physically interact with each other in a coordinated way. Currently, direct interactions between CPPS, like industrial manipulators, requires tight coupling of their programs to avoid collisions and other undesirable effects. Tasks like machine tending or complex assembly, which requires the use of different robot tools (e.g., screwdrivers, grippers, drilling heads, etc.), are currently coordinated using designated hand-over locations, such that only one machine interacts with a work piece or product at a given time. One of the issues which arises from this state of things, especially in the case of small part assembly, is that not only the manipulators need to be precisely fixed (e.g., to a hard floor) but also the assembly station components, where work pieces are handed over from one machine to another or where sensitive production steps (e.g., assembly) are performed upon a possibly small work piece.

This requires the precise measurement of the assembly station and the use of expensive hard materials, which allow for the precise tightening of work pieces when manipulators perform assembly steps upon them. Alternatively, 3D cameras, lasers, and other high-performance positioning sensors and systems can be used to dynamically correct the assumed locations of work pieces in the software of the manipulator.

Although such systems currently exist and are commonly used in large batch production, in the case of a lot size 1 production, where manipulators like collaborative robots can replace specialized assembly machines, which are more efficient in large batch production scenarios but less flexible than other manipulators, solving the assembly precision problem induces additional costs, e.g., in terms of person hours required to manually adjust assembly jigs, expensive materials, laborious design and 3D printing of assembly jigs, etc.

These additional costs may cancel the advantages of the lot size 1 production approach, which include a flexible, fast response to customer demands, highly configurable assembly stations, and adaptive, self-optimizing production processes and systems.

To enable the flexible integration of production machines provided by different vendors, which use various programming languages and APIs (application programmable interfaces), WO 2020/172089 A1 describes a solution based on generating software interfaces, which enable the flexible programming and soft-wiring of production machines from a cloud environment. The term "soft-wiring" (see also WO 2020/197663 A1) refers to a flexible, software-based interconnection of CPPS (e.g., over an industrial communication network) to jointly realize a production process, whereby each CPPS operates based on a program generated. These generated interfaces are provided as part of an abstraction layer like robot operation system (ROS), e.g., MoveIt, Open Motion Planning Library (OMPL). Application programmers can then program against these generated interfaces in a programming language of choice, thus abstracting the task of programming production machines from the possibly proprietary programming language used by vendor-provided APIs and programming environments.

Hence, the object of the present invention is to provide a method and computational device that overcome the above mentioned problems.

According to the invention, this object is solved by a method, a computation device, a computer program and a computer-readable storage medium according to the independent claims. Advantageous further embodiments of the invention result from the dependent claims.

Accordingly, a method for controlling an automation system, the system comprising at least one of a plurality of machines, each of the plurality of machines including a proprietary control computer and a proprietary human-machine-interface (HMI) is provided. The method comprises the following steps.

In a first step, a first program being implemented on the proprietary control computer is provided. The first program comprises at least an operating instruction for carrying out an operation by the at least one machine. Further, the first program comprises at least a displaying instruction for displaying a graphical element in the proprietary HMI.

In a second step, the graphical element in the proprietary HMI is monitored by a second program being implemented on a computation device. The computation device is connected to the automation system.

In a third step, the first program is operated by means of triggering a user input to the proprietary HMI. The user input is emulated by the second program based on the monitored graphical element.

Preferably, the operation has a physical and/or technical effect upon at least one of the plurality of machines.

The automation system is also referred to as production machine system, cyber-physical production system (CPPS) or cyber-physical system (CPS) which bring together the physical and digital systems dimensions of production machines into a common infrastructure. Production machines are, among others, industrial manipulators, collaborative robots, robot arms, autonomous guided vehicles or conveyors.

Preferably, an operation of a machine comprises at least one physical action selected from the categories moving, grasping, drilling, screwdriving, etc.

Preferably, the automation system comprises one machine. More preferably, the system comprises more than one machine, preferably two, three or four machines. Particularly preferred the system comprises a plurality of machines. The number of machines is not limited.

The plurality of machines preferably consists of diverse production machines. Diverse means that the machines interconnected in the automation system can be of different types (industrial manipulators, collaborative robots, robot arms, autonomous guided vehicles or conveyors, etc.), different models of a vendor and/or from different vendors, each of which may provide its own operating system (OS) with its own software language.

The operating system (OS) can be implemented on the proprietary control computer of the machine, wherein the control computer controls the machine. The term "proprietary" may be understood synonymously and used interchangeably with term "native".

Each production machine may provide its own proprietary control computer and its own proprietary HMI. By "proprietary" is meant that the control computer or the HMI belongs to the machine. Proprietary control computer or proprietary HMI can be used synonymously with machine's control computer or machine's HMI. It is possible that each control computer provides a different operating system and/or a different operating language.

Each proprietary HMI should be connected to the respective control computer and may run on a respective physical teach pendant (e.g. a tablet, a mobile device or wired device) of the production machine. Preferably, the proprietary HMI is provided as a dedicated device, e.g. teach pendant. By means of a user interface (e.g. screen(s), button(s), keyboard, touchpad, etc.) of the proprietary HMI and teach pendant, the production machine can be controlled by a human.

Preferably, each graphical element contains at least one textual, graphical, or symbolic indication and at least one graphical sub-element allowing a user to interact with the HMI of the machine, wherein the machine awaits a user interaction to resume execution of the first program.

Preferably, on each proprietary control computer a specific first program is implemented which is specific to the related machine and specific to the related operations to be executed by the related machine and graphical elements to be displayed by the related proprietary HMI.

Preferably, the first program can be created by a human, e.g. a software developer, on the proprietary using the proprietary HMI. More preferably, the first program can be created by means of a first program interface, implemented by software components, classes or modules.

The first type interface may be used to implement means to generate a first program specific to the HMI of a machine being automated by providing a generalized programming interfaces (GPI), which enables the generation of a program by emulating user interactions in the HMI of the respective machine.

The first program interface may specify a generic set of operations corresponding to elements of a computer program, like conditional structures, loops, etc.; and specific automation or operating commands, like motion and manipulation commands of, e.g., a robotic manipulators endowed with a gripper, drilling, or screwing tools; or a transportation machine, like an AGV or a conveyor. A GPI is defined for an entire class of machines, such as industrial manipulators. A first program interface implementing the GPI provides machine-specific implementations of the operations defined in the GPI for a class of machines by specifying (1) the graphical elements (e.g., buttons, input fields, sliders, pictures, textual and graphical menus, etc.) and the user interactions or inputs (e.g., clicking, typing, etc.) required to generate a particular command or program element in the HMI of the machine being automated. A user of the first program interface (e.g., automation software developer) programs against the GPI in a machine vendor-independent programming language and select a target machine vendor and model for which a program in the machine's proprietary, native programming environment provided as part of the machine's HMI should be generated.

Once a first program has been generated in the vendor-provided programming environment (e.g., a HMI running on the teach pendant of an industrial manipulator), a second program interface can be used to orchestrate the execution of the generated first program as well as to coordinate the interactions between several machines by emulating user interactions in their HMI to realize a production process.

Preferably, the second program is implemented by a software component, a software class or module called connector. The second program is also referred as connector. Preferably, one second program is implemented on the computation device which monitors each graphical element of each HMI.

The current invention draws on the principle of the second program enabling a generalized programming of production machines, which is not dependent on the various programming languages provided by the vendors of those machines. By contrast to WO 2020/172089 A1 and WO 2020/197663 A1, which describe interfaces and plugins provided as part of an abstraction layer that is used to bridge a preferred programming environment with a vendor-specific programming environment, the present invention uses the proprietary HMIs of the machines defined as a collection of graphical pattern or graphical elements that are monitored and operated or manipulated in the HMI of the production machine being automated or programmed.

This has the advantage of controlling the process carried out by the automation system by means of emulated user interactions so that the hardcoding and hardwiring of the automation system is not necessary.

The present invention may emulate user interputs with the HMI of a machine using the second program which defines a set of operations, which have a physical and/or technical effect upon the machine being automated (e.g., movements of a manipulator, stopping and resuming motions, switching between different courses of program execution, etc.). The second program comprising a set of graphical patterns, which are specific to the HMI of a machine type (i.e., defined by a specific vendor and model), is provided in the form of a set of graphical files stored on a storage medium of an external device, such as an edge device, an on-premise or cloud server, a laptop computer, etc.

Preferably, the proprietary HMI is specific to the respective machine. Preferably, the proprietary HMI is provided by a vendor of the machine.

Preferably, a program language of the first program is independent from a program language of the second program. The program language of the first machine is preferably provided by the vendor of the machine.

The advantage of this independence is that any machines of different models, different vendors and/or different operating systems can be integrated into the collaborative CPPS. Moreover, (legacy) production machines can be retrofitted with additional services.

This allows the automation system to
- operate in rapidly changing environments;
- realize automation or production processes through coordinated interactions;
- provide proprietary HMI and end-user programming environments;
- operate (semi-) autonomously in safety confinements or in proximity to human workers.

The invention provides further the following advantages:
- Enables the retrofitting of heterogeneous or diverse machines with new system/product features and properties to dynamically adapt their behavior in rapidly changing environments.
- Enables the implementation of production processes through coordinated interactions (or collaborations) between heterogeneous machines and CPPS
- Enables the coordination between autonomous and semiautonomous production machines in safety-relevant application scenarios (e.g., human-robot collaboration).

According to a preferred embodiment the proprietary HMI is replicated on the computation device. Preferably, a manual input or the emulated user input to the replicated HMI is replicated on the proprietary HMI, wherein the proprietary is preferably a display of the machine's original HMI, which can run on the vendor-provided teach pendant of the machine. Preferably, a manual input or the emulated user input to the proprietary HMI via the teach pendant are replicated on a virtual or replicated HMI (i.e., a virtual teach pendant) that can run on a remote, third party computing device (e.g., laptop or PC). The terms virtual HMI and replicated HMI will henceforth be used interchangeably.

In a preferred embodiment, the replicated HMI (or virtual HMI) can be a "virtual teach pendant" of an industrial robot, which allows a user to program and control the robot from a possibly remote, third-party computing device, such as a laptop or PC. The virtual teach pendant can be provided by the vendor of the machine or a third party as a software plugin, add-on, app, or web page.

This embodiment enables the extension of proprietary HMI and hardware-based interfaces by additional software-based interfaces implemented on top of a virtual HMI advantageously in a non-intrusive way.

Each virtual HMI replicates the respective proprietary (physical) HMI of the machine on the computational device using remote monitoring and control tools, such as Remote Desktop Connection or RealVNC. The replication may include both software-based graphical elements and emulated hardware elements, such as physical buttons, wheels, knobs, joy sticks, etc. The effect of any operation performed by an external control entity (e.g., algorithm or software component running on a third-party computing device or in a cloud environment) in a virtual HMI (e.g., a virtual teach pendant) will be replicated in the HMI running on the corresponding physical teach pendant of the machine. Any operation performed by a user or occurring within an application program (first program) running on the physical teach pendant will be replicated in the virtual HMI (i.e., virtual teach pendant).

According to a preferred embodiment the emulated user input is triggered by the second program to the proprietary HMI via the replicated HMI. This enables the remote monitoring and manipulation of a plurality of machines in a non-intrusive way.

According to a preferred embodiment the second program monitors and operates the proprietary HMI using graphical processing and/or machine learning algorithms.

Preferably, the algorithms detect graphical elements in the HMI automatically. Advantageously the detection of a specific graphical element is independent from a specific position in the HMI.

Preferably, the graphical processing and/or machine learning algorithms are capable of detecting specific graphical patterns and/or texts.

Preferably, the second program encapsulates at least one GUI automation library (e.g., SikuliX, PyAutoGUI), which enables the monitoring and manipulation of the virtual HMIs using graphical processing and machine learning algorithms.

According to a preferred embodiment a first operating instruction of the first program is followed by the displaying instruction. Preferably, the displaying instruction is followed by a second operating instruction. Preferably, the first program is paused during displaying the graphical element according to the displaying instruction. Preferably, the paused first program is stopped or continued with the second operating instruction based on the emulated user interaction upon the graphical element.

Preferably, the machine, respectively the first program of the machine, awaits a user input to resume execution of the first program. Preferably, the operation of the machine is resumed by means of triggering an emulated user input in the proprietary HMI by the second program upon the monitored graphical element.

Preferably, the embodiment enables the collaboration between several machines, whereby a first machine specific first program of a first machine is paused at a particular point in the execution - referred to as a first "Rendezvous Point" (RP) - by emulating user interactions in a first HMI of the first machine; upon which the execution of a second machine specific first program of a second machine is started or resumed from a second RP by manipulating a user input in the second HMI of the second machine, during which the first machine is waiting until the execution of the second program of the second machine has reached a third RP, in which the first program resumes the initial execution.

Preferably, the second operating instruction chronologically follows the displaying instruction expecting a user input to continue with the second operating instruction of the first program.

According to a preferred embodiment the automation system includes a further machine of the plurality of machines. Like each machine of the plurality of machines, the further machine includes a proprietary or vendor-provided control computer specific to the further machine, and a proprietary human-machine-interface specific to the further machine. A first program specific to the further machine is implemented on the proprietary control computer of the further machine.

Preferably, each production machine of the automation system fulfils a different task in the production process. Accordingly, each production machine is provided by a different first program generated in each vendor-provided programming environment.

Preferably, the second program comprises a respective software function for each machine of the plurality of machines that are involved in the automation (production) process of the automation system. Preferably, the second program comprises at least one software function for each machine that is involved. Preferably, the second program comprises a series of software functions.

Preferably, each software function automatically triggers a specific emulated user interaction with the proprietary HMI of the respective machine, preferably via the replicated HMI.

Software functions are also referred to as RendezvousPoint (RP) handler functions. Automatically means that a user input or user interaction by a human is not necessary.

According to a preferred embodiment, the second program contains a reference rank variable that is a global rank of the second program. The reference rank variable is also referred to as globalRank and is an integer variable.

Preferably, each software function contains a specific rank value. Preferably, each software function is executed when a value of the reference rank variable equals the specific rank value of the respective software function. Preferably, a specific rank value of a software function differs from a specific rank value of another software function of the series of software functions of the second program. Preferably, a specific rank value of a software function equals a specific rank value of another software function of the series of software functions of the first program. The reference rank variable preferably allows different software functions to execute at different times or at the same time.

According to a preferred embodiment each software function when executed increments the reference rank variable. Preferably, at least one of the series of software functions increments the reference rank variable. Preferably, each software function contains a subordinate software function, which increments the value of the reference rank variable.

Preferably, each software function increments the reference rank variable. When the rank variable reaches a maximum value defined by a maxRank value, it is reset to 0. This allows the second program to cycle through the software functions of increasing rank sequentially, if two or more software functions have different rank value, or in parallel, if two or more software functions have the same rank value.

According to a preferred embodiment, the graphical element is a dialog window comprising at least a button and/or an input field. Preferably, the graphical element contains at least one textual, graphical, or symbolic indication and at least one graphical pattern allowing the user to interact with the HMI of the specific machine. Preferably, the machine awaits a user input to resume execution of the first program.

Preferably, the operation a first program of a machine is resumed by means of triggering an emulated user interaction with the proprietary HMI by the second program based on the monitored graphical element.

Preferably, the dialog window provides at least options how to proceed further. This requires a user input. Alternatively, it requires an emulated user input by the second program. Preferably, the first program can be stopped by the (emulated) user input or the first program can be continued, preferably by a second operation instruction followed by the displaying instruction of the second program. Preferably, settings of the first program can be changed by the (emulated) user input.

According to a preferred embodiment the emulated user interaction comprises at least one element selected from the group of clicking on the button of the dialog window, typing in the input field of the dialog window and pressing the enter key.

Preferably, the dialog window provides a stop button and/or a continue button. The first program is stopped by clicking on the stop button or continued by clicking on the continue button.

Preferably, the first program expects a specific user input or emulated user input, before the first program is resumed by continuing with a subsequent, second operation instruction. Preferably, a click on a continue button is expected by the first program.

According to the invention, a computation device is also provided for solving the above problem. The advantages and embodiments described above in connection with the method according to the invention also apply mutatis mutandis to the computation device according to the invention. In this context, the process steps described in connection with the method can be seen as functional features of respective means of the computation device.

According to the invention, a computation device (CD) for controlling an automation system is provided. The system comprises at least one of a plurality of machines, each of the plurality of machines including a pregiven proprietary control computer and a pregiven proprietary human-machine-interface, i.e. HMI, wherein a pregiven first program is implemented on the proprietary control computer. The first program comprises at least an operating instruction for carrying out an operation by the at least one machine, and at least a displaying instruction for displaying a graphical element in the proprietary HMI. The computation device is provided with a network interface, also referred to as first network interface, for connection with the automation system.

According to the invention a second program is implemented on the computation device. The second program is designed for and capable of monitoring a graphical element of the pregiven proprietary HMI via the first network interface. The second program is designed for and capable of providing a control signal for operating, respectively controlling the first program by means of triggering an emulated user input to the proprietary HMI based on the monitored graphical element.

Preferably, the computation device also provides a second network interface with an external computational infrastructure, such as an on-premise or a cloud server.

Preferably, the emulated user input triggers the execution of at least one operation which has a physical and/or technical effect upon at least one of the machines.

Preferably, the (CD) is, among other possibilities, an edge device, a server, an industrial computer and/or a laptop computer. The CD is also denoted connector device (CD).

According to a preferred embodiment the computation device comprises a software component capable of replicating the pregiven proprietary HMI. Preferably, this software component is a remote monitoring and control tool, such as Remote Desktop Connection or RealVNC.

Preferably, the computation device includes a monitor device. The monitor device is divided into screen regions. Preferably, each screen region is associated with a respective one of the plurality of machines. Preferably, the replicated HMI is associated with one of the screen regions.

Preferably, the monitor device comprises a single monitor or multiple monitors.

Preferably, the computation device comprises a corresponding graphics card that is capable of displaying the set of graphical patterns of the first interface on the monitor device.

Preferably, a first replicated HMI of a first machine of the plurality of machines is associated with a first screen region. Preferably, a second replicated HMI of a second machine of the plurality of machines is associated with a second screen region. Preferably, a further replicated HMI of a further machine of the plurality of machines is associated with a further screen region.

According to a preferred embodiment the computation device is connected with the automation system via a network switch or a network router. Preferably, the first network interface is connected with the automation system.

Preferably, the computation device provides means for automatically detecting each of the plurality of machines being plugged in the network switch or router.

According to the invention, a computer program and a computer-readable storage medium is also provided for solving the above problem.

The invention will be explained in yet greater detail with reference to exemplary embodiments depicted in the drawings as appended.

The accompanying drawings are included to provide a further understanding of the present invention and are incorporated in and constitute a part of the specification. The drawings illustrate the embodiments of the present invention and together with the description serve to illustrate the principles of the invention. Other embodiments of the present invention and many of the intended advantages of the present invention will be readily appreciated as they become better understood by reference to the following detailed description. Like reference numerals designate corresponding similar parts.

In the figures
- FIG 1: shows a schematic automation system connected to a computation device;
- FIG 2: shows a Robot HMI Automation Connector Architecture;
- FIG 3: shows schematically a logical architecture and HMI mapping scheme of the computation device;
- FIG 4: shows schematically a logical architecture of a second program and its relations to other software components;
- FIG 5: shows a flow diagram of different types of software functions;
- FIG 6: shows a flow diagram of further different types of software function;
- FIG 7: shows a Python implementation of different types of software functions;
- FIG 8: shows an initialization of a second program realizing a coordinated interaction between three robots performing a production process;
- FIG 9: shows a collaboration between three robots realizing a production process;
- FIG 10: shows a schematic flow diagram illustrating the method according to the invention.

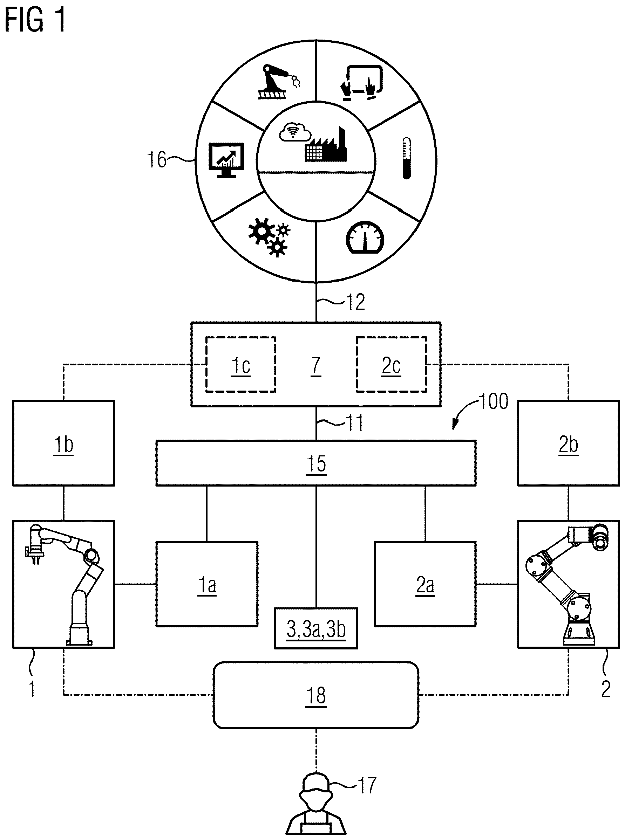

FIG 1 shows a schematic automation system 100 connected to a computation device (CD) 7, e.g., an edge device, a server, an industrial computer, a laptop computer, etc. The CD 7 is also denoted Connector Device (CD) 7, providing a first communication interface 11 with an automation system 100 or industrial network connected through a switch 15 or router 15 with the production machines 1,2,3 being controlled, and a second network interface 12 with an external computational infrastructure 16, such as an on-premise or a cloud server.

The external computational infrastructure 16 may comprise means for connection with HMIs, sensors, monitoring tools, instruments, control systems and robots.

In FIG 1 continuous lines represent physical connections, dash lines represent virtual monitoring or replication correlation and dot dash lines represent a physical interaction.

The machines 1,2,3 each include a proprietary control computer 1a, 2a, 3a that are connected to the router 15. Further, the machines 1,2,3 each include a proprietary HMI 1b, 2b, 3b.

Deployed on the CD 7 are containerized software components, which comprise (1) remote monitoring and control software able to connect through the first interface 11 of the CD 7 to the proprietary computers 1a, 2a, 3a hosting the HMIs 1b, 2b, 3b of the said machines 1,2,3 and to replicate them on a monitor device 13 of the CD 7, e.g. a plurality of virtual monitors (or screens) of the CD 7; (2) graphical processing and machine learning libraries for monitoring graphical elements 5a,5b,5c in real time in a plurality of replicated or virtual HMIs 1c, 2c, 3c, which replicate the HMIs running on the machine's teach pendant 1b, 2b, 3b of the said machines 1,2,3 in real time, and for obtaining at least one trigger condition (TC) based on processing graphical elements 5a,5b,5c in the virtual HMIs 1c, 2c, 3c and associating them with a particular action performed by a machine 1,2,3 being monitored or by a user 17 of the said machine 1,2,3 in the real HMI 1b, 2b, 3bof the said machine 1,2,3; (3) software libraries for emulating user interactions in the virtual HMIs 1c, 2c, 3c which are replicated in the real HMIs 1b, 2b, 3bof the said machines 1,2,3 depending on the TCs obtained by monitoring their associated virtual HMIs 1c, 2c, 3c.

The connection between the first network interface 11 and the network switch 15 can be a wired or a wireless connection. The machines 1,2,3, shown as robot arms in FIG 1, can interact with the user at a collaborative assembly station 18. The number of machines 1,2,3 in FIG 1 is exemplary. The invention is not limited to a number of machines 1,2,3.

A first connector interface (third interface) or Common Interface for generalized Robot Programming (CIRP) is used to implement means to generate each first programs 4a,4b,4c implemented on each proprietary control computers 1a, 2a, 3a specific to the HMI 1b, 2b, 3b of a machine 1,2,3 being automated by providing a generalized programming interfaces (GPI), which enables the generation of each first program 4a,4b,4c by emulating user interactions in the HMI of the respective machine 1,2,3.

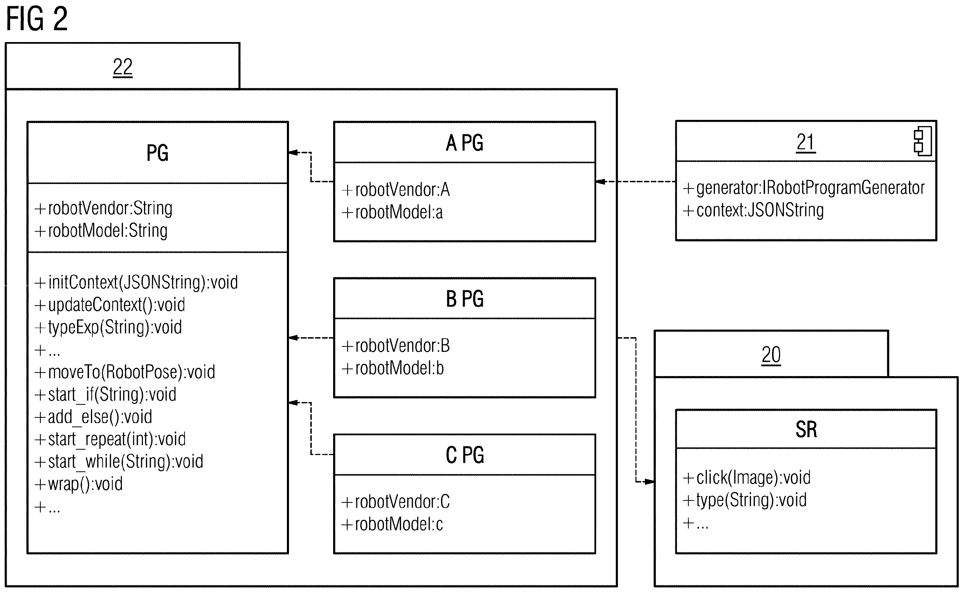

As shown in FIG 2 the first connector interface specifies a generic set of operations corresponding to elements of the first program 4, like conditional structures, loops, etc.; and specific automation commands or operating instructions 8,8a like motion and manipulation commands of, e.g., a robotic manipulator endowed with a gripper, drilling, or screwing tools; or a transportation machine, like an AGV or a conveyor.

A GPI is defined for an entire class of machines 1,2,3, such as industrial manipulators. A connector interface implementing the GPI provides machine-specific implementations of the operations defined in the GPI for a class of machines 1,2,3 by specifying the graphical elements 5a,5b,5c (e.g., dialog-windows or popup-windows, buttons, input fields, sliders, pictures, textual and graphical menus, etc.) and the user interactions (e.g., clicking, typing, etc.) required to generate a particular instruction 8,8a or program element in the HMI 2b,3b,4b of the machine 1,2,3 being automated.

A user of CIRP (e.g., automation software developer) programs against the GPI in a machine vendor-independent programming language and selects a target machine vendor and model for which a first program 4a,4b,4c in the machine's proprietary, native programming environment provided as part of the machine's HMI 1b, 2b, 3b should be generated. According to the user's selection, the appropriate second program 6 is triggered in such a way that it can emulate user interactions upon the target machine's HMI 1b, 2b, 3b.

The computation device 13 pertaining to the present invention illustrated in FIG 1 provides the hardware and communication support for enabling the generation of the first program 7 as described.

As shown in FIG 2, the CIRP is related to at least one of a plurality of robot program generator (PG) classes, components, or modules, shown as A PG, B PG and C PG; a generic GUI automation or Robotic Process Automation (RPA) library 20 including screen region (SR) operations; and an RPA robot program model 21. In FIG 2, a unified modeling language (UML) diagram, in particular a class diagram is demonstrated. A package RobotHMIAutomation 22, which contains a CIRP called IRobotProgramGenerator (PG) as well as several implementations of that CIRP can be provided as part of an embodiment of the present disclosure. The CIRP specifies a series of required fields and methods that need to be provided or implemented by any robot-specific program generator class, module, or component. An example of such a module may contain Python code and graphical files, which represent graphical elements 5a,5b,5c displayed in the machine's HMI 1b, 2b, 3b that can be recognized by RPA engines and software robots. In FIG 2, the dependency of the RobotHMIAutomation package 22 on an external RPA library 20 is explicitly illustrated using a dashed UML dependency arrow.

A second type of a connector interface can be used to orchestrate the execution of the generated first program 4a,4b,4c via the virtual HMI 1c, 2c, 3c as well as to coordinate the interactions between several machines 1,2,3 by emulating user inputs in their proprietary HMI 1b, 2b, 3b to realize a production process.

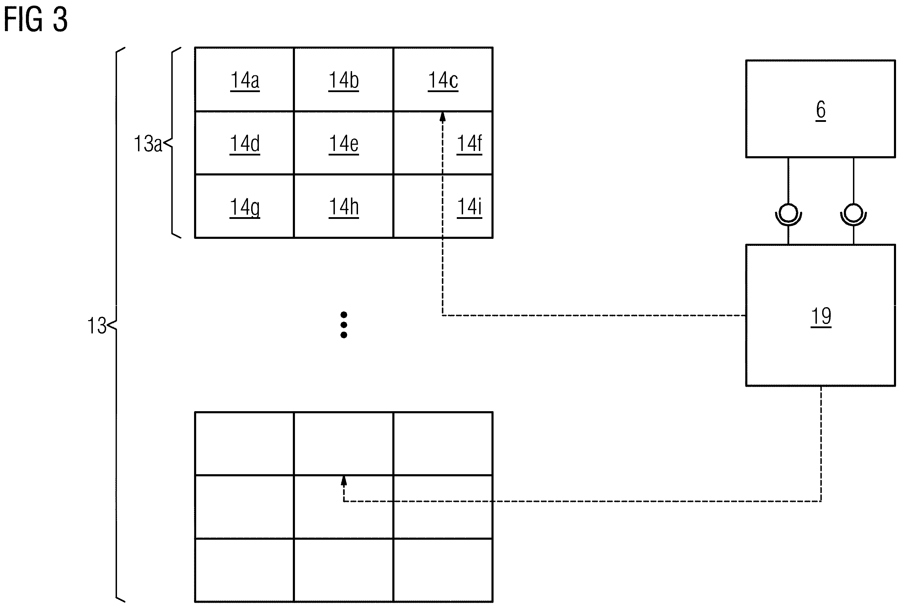

The logical architecture and HMI mapping scheme of the computation device (CD) 7 is shown in FIG 3. The CD 7 including monitor device 13 provides multi-display capabilities for monitoring a plurality of virtual HMIs 1c, 2c, 3c replicated using a remote viewing and control tool (e.g., RealVNC).

In a first scenario, a multi-display can be realized using a high-resolution real or "headless" (i.e., virtual) display device 13 or driver in which multiple virtual HMIs 1c, 2c, 3c are arranged side by side, as shown in FIG 3. In this scenario, each virtual HMI 1c, 2c, 3c is associated with (or mapped to) a screen region 14a-14i and can thus be individually controlled using a GUI automation tool or library (e.g., SikuliX, PyAutoGUI, etc.). Such tools provide means for monitoring and controlling graphical elements 5a,5b,5c and input controls in different screen regions 14a-14i.

In a second scenario, the CD 7 provides multiple virtual monitors using a virtual monitor driver. The virtual monitors extend the maximum available space on a single screen 13a. When multiple virtual monitors are used, the GUI automation tools can monitor different regions 14a-14i of different screens (or monitors) by addressing them using screen IDs and region coordinates.

The virtual HMI service registry (VHSR) 19 is available for programmatic access, e.g., from a GUI automation program. The VHSR 19 is always available when a supported machine 1,2,3 (i.e., an industrial robot or some other production machine endowed with a HMI 1b, 2b, 3bwhich allows a remote viewing and control connection) is connected to the CD 7 via a network switch 15.

The VHSR 19 provides two service interfaces, which are used by the second program 6 running on the CD 7, shown as linking lines in FIG 3:
- getAvailableHMIs: returns a list of identifiers of the currently available virtual HMIs 1b, 2b, 3b.
- getHMIById(String): returns a VirtualHMI object corresponding to the identifier given as a parameter. The VirtualHMI object realizes a façade to the monitoring and user interaction emulation methods provided by a GUI automation library 20.

In FIG 3, the dotted lines indicate that virtual HMIs 1c, 2c, 3c can be assigned to screen regions 14a-14i using the VHSR 19.

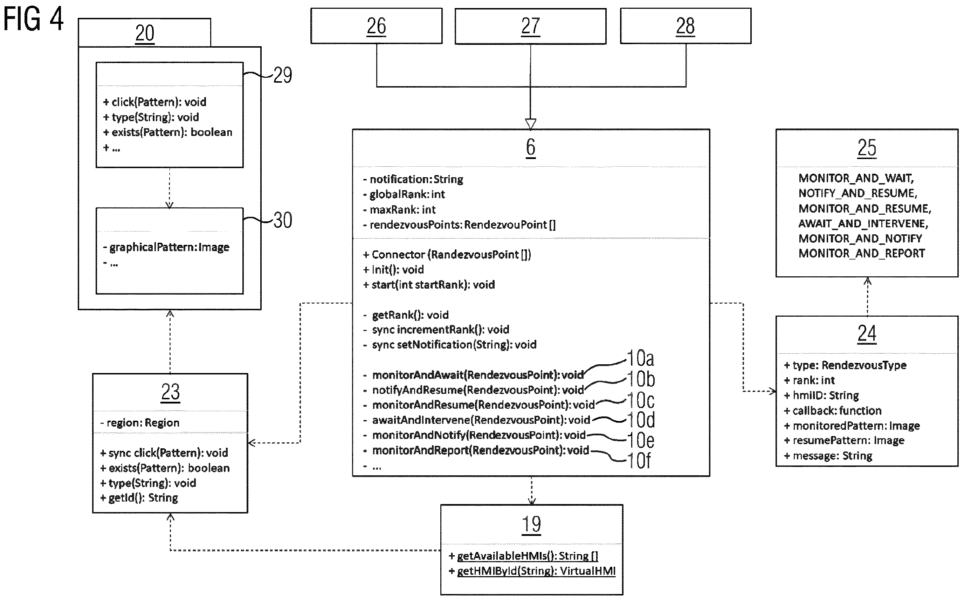

FIG 4 illustrates the logical architecture of a second program 6, which can be used to monitor and control (i.e., to manipulate or operate) one or several machines 1,2,3. The second program 6 can be implemented as a class, module, or component, which realizes a communication mechanism between sequential processes (i.e., first programs 4a,4b,4c executing on different production machines 1,2,3, like industrial robots) .

The second program 6 may be related to other components, like an N-MachineConnector 26 (class), a HumanMachineConnector 27 (class) or a SafeguardConnector 28 (skillclass).

Dashed lines indecate dependencies, wherein the second program 6 can be dependant on the VirtualHMIServiceRegistry 19 and the virtualHMI class 23. The virtualHMI class 23 is again dependent on the RPALibrary 20 including a region component 29 and a pattern component 30.

A second program 6, also referred to as connector, is defined by one or a plurality of software functions 10a-10f, also referred to as RendezvousPoints (RP) handlers or RP handler functions in connection with a Rendezvous Point (RP) 24. A RP 24 is a data structure (e.g., a class or dictionary) containing the following items:
- type 25: an enumeration value (integer) indicating the type of the current RP handler 10a-10f. Possible values include but are not limited to: MONITOR_AND_WAIT, NOTIFY_AND_RESUME, MONITOR_AND_RESUME, AWAIT_AND_INTERVENE, MONITOR_AND_NOTIFY, MONITOR_AND_REPORT. The exact workings of each of these nonexhaustive RP types 25 will be explained below using concrete examples.
- rank: an integer indicating the rank of the respective RP handler 10a-10f (specific rank value). The rank is used by the second program 6 to check if the current RP 10a-10f should be handled at a certain point in the execution. Using the rank, the second program 6 controls if and when it handles an RP 10a-10f by executing the function associated with the current RP's type (the description of these functions is provided below).
- hmiID: a string indicating the target virtual HMI 1c, 2c, 3c upon which the RP 10a-10f operates.
- callback (cb): a pointer to a function or service, which is to be called by the second program 6 when handling the RP 10a-10f. This function can, for example, implement a call to a cloud service for reporting or other purposes.
- monitoredPattern: an image (i.e., graphical picture) representing a portion of a screenshot. The monitoredPattern can be a text or graphical pattern on the screen, upon which the RP handler 10a-10f reacts. The monitoredPattern can, for example, be a text in a message box or dialog-window.
- resumePattern: like the monitoredPattern, this is a graphical pattern in the virtual HMI 1c, 2c, 3c (designated by the hmiID) upon which the software function 10a-10f will perform an action (e.g., a click) that will resume the execution of the underlying process (i.e., the execution of the first program 4a,4b,4c controlling the respective machine 1,2,3). Note that a resumePattern is required by certain software functions 10a-10f depending on the RP type, as described below.
- message: a string containing the message that the RP's handler function 10a-10f will either wait for or write in the connector's notification field. The connector's notification field of the respective HMI 1c, 2c, 3c is used to pass messages between handler functions 10a-10f, which execute in their own threads. An RP handler function 10a-10f can set this field by calling the thread safe setNotification(message) method.

The second program 6 maintains a global rank variable, called globalRank, which allows different RP handlerss 10a-10f to execute at different times. Each RP handler function 10a-10f will increment the globalRank by calling the thread safe incrementRank() function. When the rank reaches the maxRank value, it is reset to 0. This allows the second program 6 to cycle through RPs 10a-10f of increasing rank sequentially - if two or more RPs 10a-10f have different ranks - or in parallel - if two or more RPs 10a-210f have the same rank.

A second program 6 provides a series of RP handler functions 10a-10f, which includes and is not limited to (see FIG 4):
- monitorAndAwait(RendezvousPoint): monitors the monitoredPattern in the screen region 14a-14i corresponding to the virtual HMI 1c, 2c, 3c designated by the RP's hmiID field and, upon recognition of the monitoredPattern, calls the RP's callback function; then increments the second programs's globalRank and waits until the notification field equals the value of the RP's message field before consuming the notification (i.e., setting the connector's notification to "None") and starting a new execution cycle.
- notifyAndResume(RendezvousPoint): monitors the monitoredPattern in the screen region 14a-14i corresponding to the virtual HMI 1c, 2c, 3c designated by the RP's hmiID field and, upon recognition of the monitoredPattern, calls the RP's callback function; then sets the connector's notification to the value of the RP's message field, and clicks on the graphical element 5a,5b,5c designated by the resumePattern in the screen region 14a-14i of the virtual HMI 1c, 2c, 3c designated by the RP's hmiID field, before incrementing the globalRank of the second program 6 and starting a new execution cycle.
- monitorAndResume(RendezvousPoint): monitors the monitoredPattern in the screen region 14a-14i corresponding to the virtual HMI 1c, 2c, 3c designated by the RP's hmiID field and, upon recognition of the monitoredPattern, calls the RP's callback function; then clicks on the graphical element 5a,5b,5c designated by the resumePattern in the screen region 14a-14i of the virtual HMI 1c, 2c, 3c designated by the RP's hmiID field before incrementing the globalRank of the second program 6 and starting a new execution cycle.

- awaitAndIntervene(RendezvousPoint): checks if the monitoredPattern exists in the screen region 14a-14i corresponding to the virtual HMI 1c, 2c, 3c designated by the RP's hmiID field; in which case it checks if the connector's notification field contains the message designated by the RP's message field; in which case it consumes the notification and calls the RP's callback function before clicking on the graphical element 5a,5b,5c designated by the pattern in the screen region 18a,18b,18c of the virtual HMI 20a,20b,20c designated by the RP's hmiID field and starting a new execution cycle.
- monitorAndNotify(RendezvousPoint): checks if the monitoredPattern exists in the screen region 14a-14i corresponding to the virtual HMI 1c, 2c, 3c designated by the RP's hmiID field; in which case it sets the connector's notification field to the value contained in the RP's message field; then calls the RP's callback function and waits until the monitoredPattern disappears in the screen region 14a-14i corresponding to the virtual HMI 1c, 2c, 3c designated by the RP's hmiID field before starting a new execution cycle.
- monitorAndReport (RendezvousPoint) - monitors the monitoredPattern in the screen region 14a-14i corresponding to the virtual HMI 1c, 2c, 3c designated by the RP's hmiID field and, upon recognition of the monitoredPattern, calls the RP's callback function before incrementing the globalRank of the second program 6 and starting a new execution cycle.

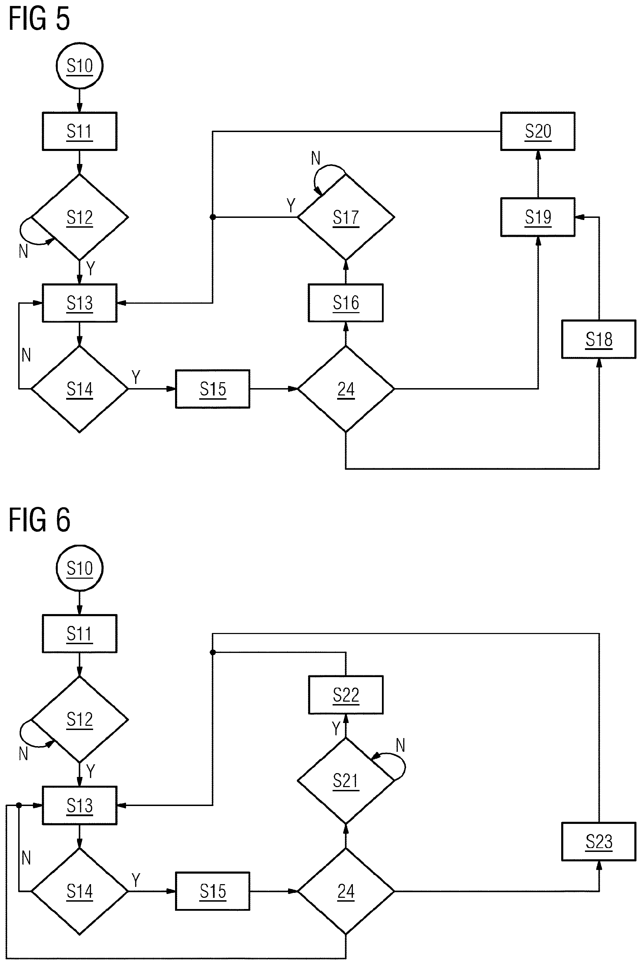

FIG 5 and FIG 6 show flow diagrams (or threads) of different types of RP handler functions 10a-10f as described above. For simplified illustration, the flow diagrams of three software functions are integrated in each of FIG 5 and FIG 6. First, the flow diagram is started by step S10 and initialized by step S11. In step S12 it is checked if the value of the reference rank of the second program 6 equals the specific rank of a software function 10a-10f. This step is executed as a loop. If the rank values do not match (illustrated by N), the rank will still be checked. If the value of the reference rank matches the specific value of a software function (illustrated by Y), a corresponding virtual HMI 1c, 2c, 3c is monitored in step S13. If a monitored graphical element 5a,5b,5c matches with the provided graphical pattern (monitoredPattern) of the respective software function in step S14 (illustrated by Y), the respective software function is called by a call service S15. Depending on the RP type 24 of the software function the respective threads of the flow diagram split.

If the respective software function is of type monitorAndAwait, the value of the reference rank is increased in step S16. In step S17, the software function waits until the notification field equals the value of the RP's message field before consuming the notification. Subsequently, a new execution cycle is started.

If the respective software function is of type monitorAndResume, the software function clicks on the graphical element 5a,5b,5c designated by the resumePattern in the screen region 14a-14i corresponing to the virtual HMI 1c, 2c, 3c in step S19, before incrementing the value of the reference rank of the second program 6 in step S20.; and starting a new execution cycle.

If the respective software function is of type notifyAndResume, the software function sets the connector's notification to the value of the RP's message field in step S18, and clicks on the graphical element 5a,5b,5c designated by the resumePattern in the screen region 14a-14i of the virtual HMI 1c, 2c, 3c designated by the RP's hmiID field in step S19, before incrementing the reference rank in step S20 and starting a new execution cycle.

FIG 6 shows flow diagrams of further different types of RP handler functions 10a-10f as described above. Steps S10 to S15 in FIG 6 are identical to the steps S10 to S15 in FIG 5.

If the respective software function is of type awaitAndIntervene, the software function checks if the connector's notification field contains the message designated by the RP's message field in step S21; in which case it consumes the notification and calls the RP's callback function before clicking on the graphical element 5a,5b,5c designated by the pattern in the screen region 14a-14i of the virtual HMI 1c, 2c, 3c designated by the RP's hmiID field in step S21; and starting a new execution cycle.

If the respective software function is of type monitorAndNotify, the software function sets the Connector's notification field to the value contained in the RP's message field in step S23; then calls the RP's callback function and waits until the monitoredPattern disappears in the screen region corresponding to the virtual HMI 1c, 2c, 3c designated by the RP's hmiID field before starting a new execution cycle.

If the respective software function is of type monitorAndReport, the software function calls the RP's callback function before incrementing the reference rank of the second program 6 and starting a new execution cycle.

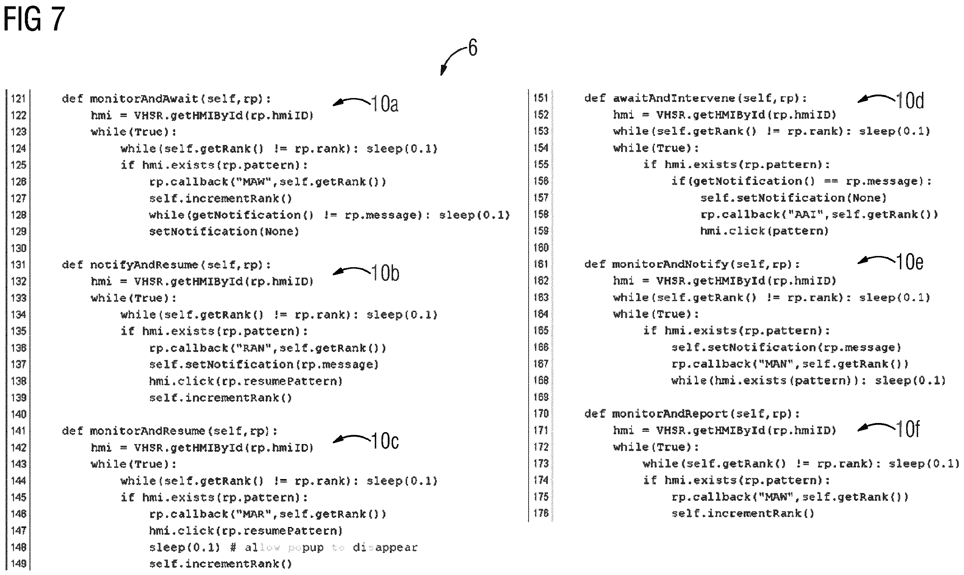

Exemplary Python implementations of the described RP handler functions 10a-10f are provided in FIG 7.

The second program 6 executes the software functions 10a-10f corresponding to a certain RP only when the globalRank is equal to the rank of the RP being handled. While all RP handler types only execute when the rank of the RP being handled equals the value of the globalRank of the second program 6, not all of them increment the globalRank. The handlers 10a-10f, which do not increment the globalRank (e.g., awaitAndIntervene, monitorAndNotify) execute on a "fire and forget" basis, meaning that they communicate with each other and coordinate through notifications without consideration of the globalRank. These handlers 10a-10f only use the RP's specific rank once to check that the second program 6 has initialized and has started execution by setting the globalRank to a value equal to the rank of the RP 10a-10f being handled.

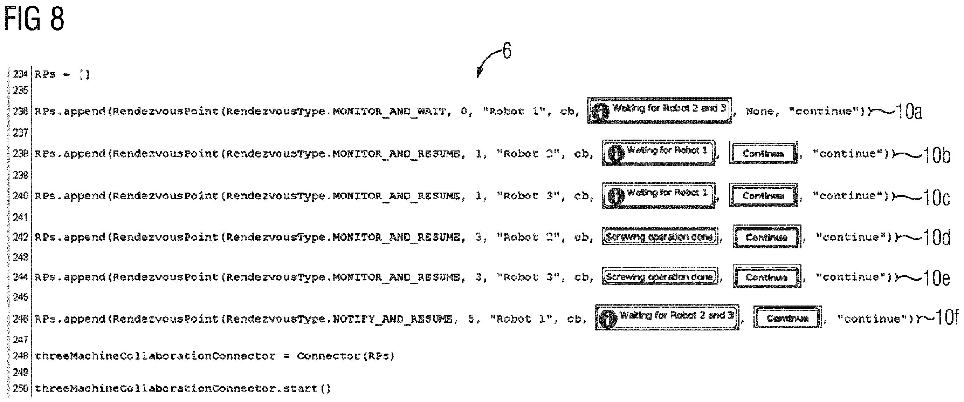

The second program 6 is initialized using a list of RPs 10a-10f (as shown, for example, in FIG 8), which - when handledrealize a coordinated interactive manipulation of a plurality of production machines 1,2,3 (e.g., industrial robots) by emulating user interactions in their proprietary HMIs 1b, 2b, 3b.Using the infrastructure provided by the CD 7, the RP handlers 10a-10f described above allow for the realization of different types of second programs 6. One type of manipulation enabled by a second program 6 pertains to the coordination of interactions (i.e., collaboration) of a plurality of machines 1,2,3 by orchestrating a collaboration between the said machines 1,2,3 to the end of realizing a production process, which consists of several production steps which need to be performed by different machines 1,2,3; whereby each machine 1,2,3 is controlled by a first program 4a,4b,4c executing on the respective machine 1,2,3.

In this context, the second program 6 will coordinate the tasks of each machine 1,2,3 participating in the collaboration by monitoring and manipulating their HMIs 1b, 2b, 3b(i.e., by emulation user interactions with their HMIs) through their corresponding VirtualHMI objects provided by the VHSR 19 hosted on the CD 7.

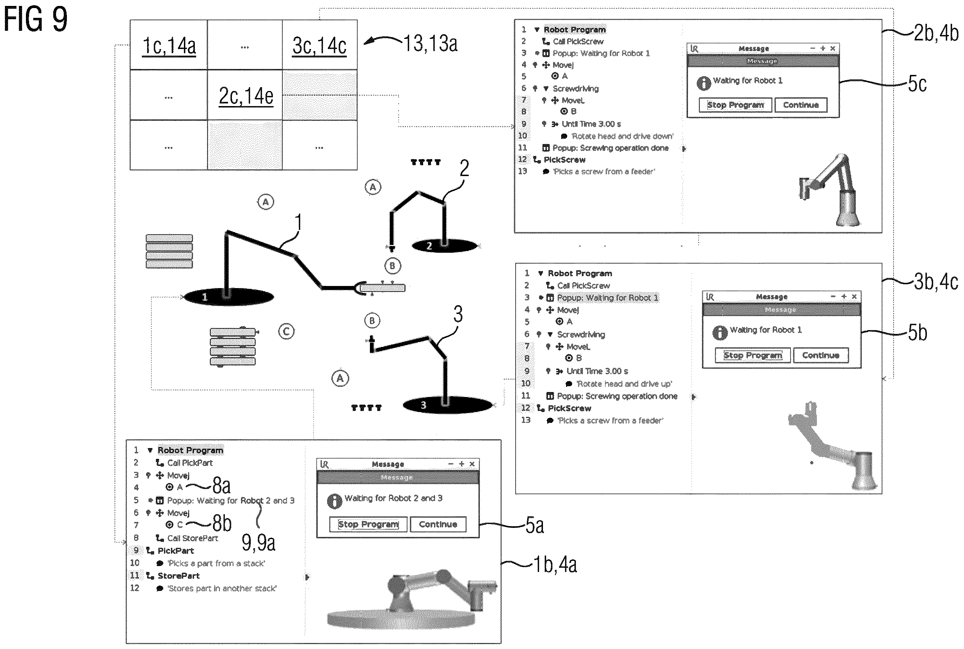

FIG 9 illustrates an application of the method and computation device 7 of the invention. The CD 7 can be used to realize a collaboration between three industrial robots 1,2,3 to the end of realizing a common production process. The first robot 1 (i.e., "Robot 1") positions a work piece precisely and holds in tight, while two further robots 2,3 (i.e., "Robot 2" and "Robot 3") each perform a screwing operation in parallel. When the screwing operation is completed, "Robot 1" stores the part with screws and picks a new one without screws, while "Robot 2" and "Robot 3" pick further screws. The operations marked with the same character (e.g., "A") occur in parallel; whereas those marked with distinct characters occur sequentially.

FIG 9 shows a virtual screen showing virtual HMIs 1c, 2c, 3c provided by the CD 7, which replicates the proprietary HMIs 1b, 2b, 3bof the three robots 1,2,3. In this example, robots of the same type are used but the invention allows for the use of any robot or machine, provided that its HMI 1b, 2b, 3b is accessible through a remote viewing and control tool (e.g., RealVNC) and that the program model used by the respective machine supports user interaction through dialog or popup messages, user inputs, and other visual interactive means; whereby the inputs and feedback from the user can be input by tapping on a touch screen or through any other means that can be represented as a form of clicking on or typing in a graphical pattern of graphical element 5a,5b,5c (e.g., button, text field) on the screen.

The first program 4a of "Robot 1" implements the "PickPart" and "StorePart" commands as subroutines (the implementation of these subroutines is not shown in FIG 9). In between these operations, the robot performed two motions corresponding to operation instructions 8,8a (A) and (C) in FIG 9, through which it transports the part from a first designated storage to a second designated screwing location and then to a third designated storing location.

After operation (A) completes and before operation (C) starts, the first program 4a of "Robot 1" displays a dialog message 5a, expecting user input in the form of a click or tap on the "Continue" button. The appearance of this dialog message is monitored by an RP handler 10a of the type "MONITOR_AND_WAIT", which has been initialized in line 236 in the code listing from FIG 8.

As shown in FIG 8, the initialization command is used to instantiate a class of type RendezvousPoint, which - among other parameters, like the rank and type of RendezvousPoint (i.e., "0" and "MONITOR_AND_WAIT", respectively), a callback function (i.e., "cb"), and the ID of the HMI 1cbeing monitored (i.e., "Robot 1") - is provided with the monitored graphical pattern (i.e., monitoredPattern) of the dialog message 5a displayed by the displaying instruction 9 of the first program 4a of "Robot 1" between operations (A) and (C), as illustrated in FIG 9.

Upon recognition of that pattern on the HMI 1c designated by the ID "Robot 1" on screen region 14a of the CD 7, the handler 10a executes the provided callback, increments the global rank of the second program 6 and then waits for a notification containing the message "continue". While waiting for this notification, the execution of the first program 4a of "Robot 1" is suspended (or paused), as this is the default behavior of a user interactive dialog message.

The globalRank of the second program 6 is now "1", which triggers the execution of the two handlers 10b,10c initialized in lines 238 and 240, both of which have been assigned rank "1". These handlers 10b,10c are of the type "MONITOR_AND_RESUME" and will thus wait for the provided monitoredPattern (i.e., a dialog message saying "Waiting for Robot 1") to appear on the screen 13,13a, upon which they resume execution by emulating a user click on the "Continue" button. Since the first handler 10a has increased the globalRank, it has signaled that "Robot 1" has finished the tending operation (i.e., getting a work piece and holding it tight at a designated screwing location) so that the screwing operations (B) may start. After resuming (i.e., clicking on the "Continue" button), the handlers 10b,10c both increment the globalRank of the second program 6 by 1, which results in globalRank being 3. This triggers the execution of the RP handlers 10d,10e initialized in lines 242 and 244, both of which are of type "MONITOR_AND_RESUME". These handlers 10d,10e will wait for the message "Screwing operation done" to appear on the screen 13,13a and then click on the "Continue" button, thus resuming the first programs 4b,4c of "Robot 2" and "Robot 3".

Finally, both handlers 10d,10e increment the globalRank by one, which results in globalRank being 5. This triggers the final RP handler 10f, initialized in line 246 in FIG 8, which is of type NOTIFY_AND_RESUME. Upon recognition of the provided pattern in the HMI 1c of "Robot 1" (i.e., a dialog message saying "Waiting for robots 2 and 3"), this handler 10f will set the connector's notification to the value specified by the message field of the RP being handled (in this case "continue"). After setting the notification to "continue", the handler resumes the execution of the first program 4a in the HMI 1c of "Robot 1" by clicking on the "Continue" button and increments the globalRank by 1.

At the same time, the notification is received by the RP handler 10a initialized in line 236 in the listing from FIG 8, which was waiting for this notification. After consuming the notification, the handler starts a new waiting cycle.

Note that in this example all three first programs 4a,4b,4c run in a continuous loop. Also, as a rule, the maxRank of the second program 6 equals the length of the provided RP list - in this example 6. When the globalRank reaches maxRank, it is reset to 0, which triggers the execution of the first handler 10a of rank 0. Hence, the execution of the connector starts with the first handler 10a and the entire cycle is repeated until the second program's stop () method is called, which interrupts all handler threads.

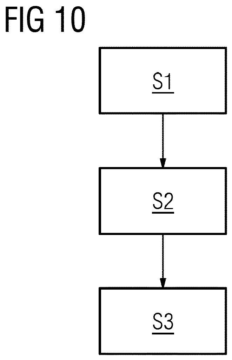

FIG 10 shows a schematic flow diagram illustrating the method according to the invention. In the first step S1 a first program 4a,4b,4c is provided, the first program 4a,4b,4c being implemented on the proprietary control computer 1a, 2a, 3a, the first program 4a,4b,4c comprising at least an operating instruction 8,8a,8b for carrying out an operation by the at least one machine 1,2,3, and at least a displaying instruction 9,9a for displaying a graphical element 5a,5b,5c in the machine's HMI 1b, 2b, 3b.

In a second step S2 the graphical element 5a,5b,5c of the proprietary HMI 1b, 2b, 3bis monitored by a second program 6 being implemented on a computation device 7, which is connected to the automation system 100.

In a third step S3 the first program 4a,4b,4c is operated by means of triggering a user input in the proprietary HMI 1b, 2b, 3b, the user input being emulated by the second program 6 based on the monitored graphical element 5a,5b,5c.

The advantages and technical innovation realized by the invention in the described example are:
(1) The collaboration between different machines 1,2,3 is realized in a non-intrusive way by emulating user interactions with the respective HMIs 1b, 2b, 3b.
(2) The collaboration can be concerted so as to allow for some machines to wait for others to execute before continuing their own execution. This approach reduces the complexity of the coordination between different machines by offering a simple coordination mechanism enabled by the monitoring and manipulation of the machines' HMIs 1b, 2b, 3bby monitoring graphical elements 5a,5b,5c and emulating user interactions in the replicated virtual HMI 1c, 2c, 3c, provided by the Computation Device 7.
(3) The first programs 4a,4b,4c of the machines participating in the collaboration can be developed using the tools and means provided by the machine vendor. Compared to existing state of the art solutions, like ROS-based publish-subscribe mechanisms in the case of industrial robots, which require writing robot programs in a ROS-specific way; or MODBUS or OPC UA-based communication, which requires specialized hardwired interfaces, the approach enabled by the invention increases the flexibility and adaptability of production machines 1,2,3 by manipulating their HMIs in a non-intrusive way.
(4) The first programs 4a,4b,4c for each machine 1,2,3 participating in the collaboration can be generated from the cloud, thus conferring the application integrator maximum flexibility, while considerably reducing the time required to program robots or other production machines on the shop floor. Using generated first programs 4a,4b,4c, which are "softwired" to enable applications like the one described in the example from FIG 9, the programming and configuration of a production cell can be adapted to the needs of a new product variant on the fly, thus enabling a "lot size 1" production in a non-intrusive way.
(5) The exemplified application further solves an important problem in the development of cyber-physical production systems (automation systems 100), namely that of precisely positioning a work piece for further processing. By holding the work piece tight during program operation, possibly with the underlying support of a table or another assembly jig, "Robot 1" ensures a highly precise positioning of the part being assembles, which enables "Robots 2" and "Robot 3" to perform a screwing operation without the need for dynamically correcting the designated screwing position, for example using a 3D camera or some other measurement device. This not only reduces hardware costs (e.g., with complex 3D sensors) but also eliminates the need for complex computations (e.g., object recognition and point cloud registration) which need to be performed to correct work piece positions during assembly. The advantages of using a state-of-the-art industrial robot to precisely position and hold a work piece is evident considering that, alternatively, highly accurate assembly jigs are necessary to position and tighten work pieces for further assembly operation. Using a robot, these positions become highly flexible and easy to generate (e.g., from a CAD file), provided that the robots 1,2,3 are calibrated and translations between a common coordinate system and the individual robots' coordinate systems are performed in the cloud upon generating robot program 4a,4b,4c, which further reduces the complexity of software development on the shop floor.
(6) A further advantage provided by the invention is represented by the possibility of "keeping the human in the loop" when developing assembly applications. If the generation of robot programs 4a,4b,4c containing precise assembly positions is not possible, users can adjust these positions on the shop floor directly in the generated programs 4a,4b,4c.
(7) A further advantage of the invention is that, by generating and leveraging first programs 4a,4b,4c created in the machine's native programming environment, safety issues can be addressed in a way that is familiar to safety certification consultants (e.g., well-known robot programming environments).
(8) Collaboration of machines 1,2,3 via a generic communication protocol, e. g. Ethernet (instead of multiple vendor specific protocols, e. g. OPC UA, ROS, ...) simplifies the technical solution and reduces costs.
(8) The Computation Device 7 can coordinate several machines 1,2,3 over a wireless connection (WLAN, 5G, ...) which reduces wiring costs and space needs in factories (no cables are needed, less physical connection interfaces).

Provided is a computation device and method for controlling a plurality of diverse production machines (e.g., industrial manipulators, collaborative robots, automatically guided vehicles, conveyors, etc.) by emulating user interactions with their vendor-provided human-machine interfaces (HMI) using graphical processing and machine learning algorithms for monitoring graphical elements (e.g., labelled buttons, graphical patterns, and other texts and graphics) in the HMIs of the said CPPS, and software functions for automatically triggering emulated user interactions (e.g., clicks, typing, tapping, etc.) for controlling the behavior of the said production machines.

The invention comprises a method for coordinating interactions between a plurality of production machines using software handlers reacting to TCs being monitored in the virtual HMIs of the said machines, whereby the said handlers trigger actions in the virtual HMIs, which are instantly replicated onto the real HMIs of the said machines, by emulating user interactions in the said virtual HMIs to the end of performing a production process involving all or a subset of the said machines.

The invention provides a method and device for automatically programming, controlling, configuring, and adapting the behavior of industrial CPS by emulating user interactions with their HMI at runtime using graphical processing and machine learning algorithms as well as remote viewing and control technologies. The emulated user interactions are orchestrated by a Connector Device which realizes a connection between an industrial cloud environment and the CPS infrastructure on the shop floor level.

## Claims

1. A method for controlling an automation system (100), the system (100) comprising at least one of a plurality of machines (1,2,3), each of the plurality of machines (1,2,3) including a proprietary control computer (1a, 2a, 3a) and a proprietary human-machine-interface (1b, 2b, 3b), i.e. HMI, the method comprising the steps of:
- providing (S1) a first program (4a,4b,4c) being implemented on the proprietary control computer (1a, 2a, 3a), the first program (4a,4b,4c) comprising at least an operating instruction (8, 8a, 8b) for carrying out an operation by the at least one machine (1,2,3), and at least a displaying instruction (9,9a) for displaying a graphical element (5a,5b,5c) in the proprietary HMI (1b, 2b, 3b);
- monitoring (S2) the graphical element (5a,5b,5c) of the HMI (1b, 2b, 3b) by a second program (6) being implemented on a computation device (7), which is connected to the automation system (100);
- operating (S3) the first program (4a,4b,4c) by means of triggering a user input in the HMI (1b, 2b, 3c), the user input being emulated by the second program (6) based on the monitored graphical element (5a,5b,5c).

2. The method of claim 1, wherein the proprietary HMI (1b, 2b, 3b) is replicated on the computation device (7), wherein a manual input or the emulated user input in the replicated HMI (1c, 2c, 3c) is replicated on the proprietary HMI (1b, 2b, 3b) .

3. The method of claim 2, wherein the emulated user input is triggered by the second program (6) via the replicated HMI (1c, 2c, 3c) .

4. The method of any of the proceeding claims, wherein the second program (6) monitors and operates the proprietary HMI (1b, 2b, 3b) using graphical processing and/or machine learning algorithms.

5. The method of any of the proceeding claims, wherein a first operating instruction (8a) of the first program (4a,4b,4c) is followed by the displaying instruction (9,9a), wherein the displaying instruction (9a) is followed by a second operating instruction (8b), wherein the first program (4) is paused during displaying the graphical element (5a,5b,5c) according to the displaying instruction (9,9a), wherein the paused first program (4a,4b,4c) is stopped or continued with the second operating instruction (8b) based on the emulated user interaction upon the graphical element (5a, 5b, 5c) .

6. The method of any of the proceeding claims, wherein the automation system (100) includes a further machine (1,2,3) of the plurality of machines (1,2,3), wherein the second program (6) comprises a respective software function (10a-10f) for each machine (1,2,3), wherein each software function (10a-10f) automatically triggers a specific emulated user interaction with the proprietary HMI (1b, 2b, 3b) of the respective machine (1,2,3).

7. The method of claim 6, wherein the second program (6) contains a reference rank variable, wherein each software function (10a-10f) contains a specific rank value, wherein each software function (10a-10f) is executed when a value of the reference rank variable equals the specific rank value of the respective software function (10a-10f).

8. The method of claim 7, wherein each software function (10a-10f) when executed increments the reference rank variable.

9. The method of any of the proceeding claims, wherein the graphical element (5a,5b,5c) is a dialog window or another user-interactive element comprising at least a button and/or an input field.

10. The method of claim 9, wherein the emulated user interaction comprises at least one element selected from the group of clicking or tapping on the button of the dialog window, typing in the input field of the dialog window and pressing the enter key.

11. A computation device (7) for controlling an automation system (100), the automation system (100) comprising at least one of a plurality of machines (1,2,3), each of the plurality of machines (1,2,3) including a pregiven proprietary control computer (1a,2a,3a) and a pregiven proprietary human-machine-interface (1b, 2b, 3b), i.e. HMI, wherein a pregiven first program (4a,4b,4c) is implemented on the proprietary control computer (1a, 2a, 3a), the first program (4a,4b,4c) comprising at least an operating instruction (8, 8a, 8b) for carrying out an operation by the at least one machine (1,2,3), and at least a displaying instruction (9,9a) for displaying a graphical element (5a,5b,5c) in the proprietary HMI (1b, 2b, 3b), wherein
- the computation device (7) is provided with a network interface (11) for connection with the automation system (100),
**characterized in that**
- a second program (6) is implemented on the computation device (7) and
- the second program (6) is capable of monitoring a graphical element (5a,5b,5c) of the pregiven proprietary HMI (1b, 2b, 3b) via the first network interface (11) and
- the second program (6) is capable of providing a control signal for operating (controlling) the pregiven first program (4a,4b,4c) by means of triggering an emulated user input in the proprietary HMI (1b, 2b, 3b) based on the monitored graphical element (5a,5b,5c).

12. The computation device (7) of claim 11, wherein the computation device (7) comprises a software component capable of replicating the pregiven proprietary HMI (1b, 2b, 3b), wherein a monitor device (13) of the computation device (7) is divided into screen regions (14a-14i), wherein each screen region (14a-14i) is associated with a respective one of the plurality of machines (1,2,3), wherein the replicated HMI (1c, 2c, 3c) is associated with one of the screen regions (14a, 14c, 14e) .

13. The computation device (7) of claim 11 or 12, wherein the network interface (11) of the computation device (7) is connected with the automation system (100) via a network switch (15), wherein the computation device (7) provides means for automatically detecting each of the plurality of machines (1,2,3) being connected to the network switch (15).

14. A computer program comprising instructions which, when executed by a computation device (7) according to one of the claims 11 to 13, cause the computation device (7) to carry out the steps of the method of one of the claims 1 to 10.

15. A computer-readable storage medium comprising instructions which, when executed by a computation device (7) according to one of the claims 11 to 13, cause the computation device (7) to carry out the steps of the method of one of the claims 1 to 10.
